(19) **Europäisches Patentamt / European Patent Office / Office européen des brevets**

(11) **EP 4 098 997 A1**

(12) # EUROPEAN PATENT APPLICATION
published in accordance with Art. 153(4) EPC

(43) Date of publication:
**07.12.2022 Bulletin 2022/49**

(21) Application number: **20710210.4**

(22) Date of filing: **31.01.2020**

(51) International Patent Classification (IPC):
**G01N 3/303** (2006.01)   **G01N 19/04** (2006.01)
**G01N 30/20** (2006.01)   **G01N 3/20** (2006.01)

(52) Cooperative Patent Classification (CPC):
**G01N 19/04; G01N 3/20; G01N 3/303; G01N 30/20;**
G01N 30/16; G01N 2030/8831; G01N 2203/0003;
G01N 2203/0023; G01N 2203/0033;
G01N 2203/006; G01N 2203/0071;
G01N 2203/0091

(86) International application number:
**PCT/ES2020/070074**

(87) International publication number:
**WO 2021/152187 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Ikerlan, S. Coop**
  **20500 Arrasate - Mondragon (ES)**
• **Universitat de Girona**
  **17004 Girona (ES)**

(72) Inventors:
• **MANTEROLA NAJERA, Julen**
  **01009 01009 VITORIA - GASTEIZ (ES)**

• **ZURBITU GONZALEZ, Javier**
  **01010 VITORIA - GASTEIZ (ES)**
• **CABELLO ULLOA, Mario Javier**
  **20500 ARRASATE - MONDRAGON (ES)**
• **URRESTI UGARTEBURU, Iker**
  **20870 ELGOIBAR (ES)**
• **RENART CANALIAS, Jordi**
  **17800 OLOT (ES)**
• **TURON TRAVESA, Albert**
  **08490 TORDERA (ES)**

(74) Representative: **Igartua, Ismael**
  **Galbaian S. Coop.**
  **Garaia Parke Teknologikoa**
  **Goiru Kalea 1**
  **20500 Arrasate-Mondragón (ES)**

(54) **PROCESS AND APPARATUS FOR DETERMINING THE ENERGY RELEASE RATE OF A TEST PIECE**

(57)   The invention relates to a process and apparatus for determining the energy release rate of a test piece, by means of an actuation element (2). The test piece (1) comprises two adherent elements (1.1, 1.2) adhered by means of an adhesive material (1.0), which are extended in a longitudinal axis (Y). The test piece (1) and the element (2) are arranged in a required position, and a pushing force is applied on the test piece (1) by means of the element (2), with said test piece (1) and said element (2) in said required position. The adherent elements (1.1, 1.2) are thus deformed defining an opening angle ($\theta$) with respect to the longitudinal axis (Y), and the energy release rate of the test piece (1) is determined from said opening angle ($\theta$) and from properties associated with the test piece (1) and with the element (2).

Fig. 4

## Description

TECHNICAL FIELD

The present invention relates to processes and apparatuses for determining the energy release rate of a test piece, in particular with processes used in tests.

PRIOR ART

Tests are known for determining the energy release rate of test pieces formed by at least two adherent elements adhered to one another by an adhesive material, which use specific processes and apparatuses for that purpose. With these processes and apparatuses, it is determined how much the adherence between the two adherent elements provided by the adhesive material resists, and/or the properties of said adherence.

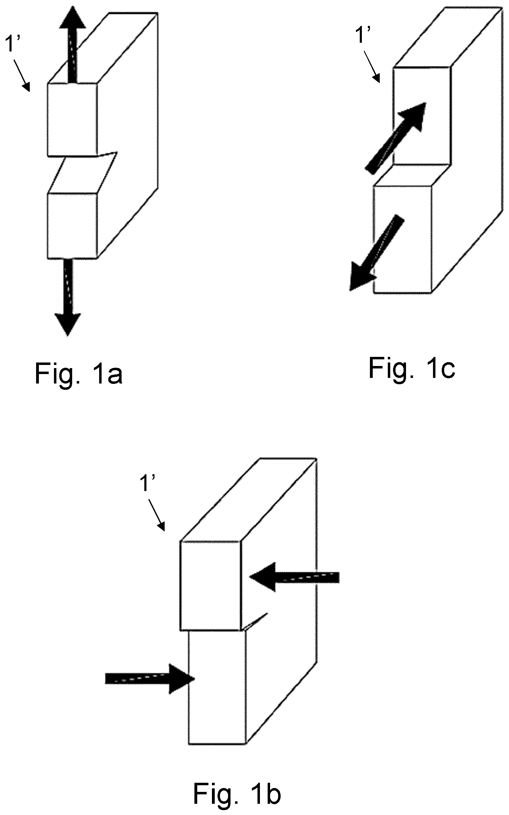

Generally, any test piece can be subjected to fracture stresses in three different modes, which are schematically depicted in Figures 1a, 1b and 1c and which are defined below:

- Mode I or opening mode (Figure 1a). To determine the energy release rate according to this mode, the starting point is a test piece 1' with a crack between the two adherent elements at one end, and a wedge is inserted, with a longitudinal pushing force, in said crack to cause the deformation, in the form of an opening, of the adherent elements.

- Mode II or sliding mode (Figure 1b). In this mode, a longitudinal pushing force is exerted on a side of the test piece 1' (on one of the adherent elements), the deformation of both adherent elements in the same direction being caused.

- Mode III or tearing or transverse breakage mode (Figure 1c). In this mode, a pushing force in a transverse direction against an adherent element of the test piece 1' and a pushing force in the opposite transverse direction on the other adherent element are exerted, the deformation of both adherent elements being caused.

The processes and apparatuses are generally focused on the determination of the energy release rate in Mode I, wherein the propagation of a crack between the two adherent elements is caused by means of the introduction of a wedge between both adherent elements, as has been described above. One of them is known from ES2460468A1, where several actuations of a wedge which is inserted in the crack of the test piece and several associated calculations (such as the modeling of pushing force and of the friction) are required, which results in a process which is complex and exclusively adapted to determine the energy release rate in Mode I.

DISCLOSURE OF THE INVENTION

The object of the invention is to provide a process and an apparatus for determining the energy release rate of a test piece, by means of an actuation element, as defined in the claims.

Both for the process and for the apparatus of the invention, the test piece comprises at least two longitudinal adherent elements adhered to one another by an adhesive material. The adherent elements are extended, in parallel, along a longitudinal axis, and the test piece comprises two opposite longitudinal ends with respect to said longitudinal axis.

A first aspect of the invention relates to a process for determining the energy release rate of a test piece, comprising an arrangement step in which the test piece and the actuation element are arranged in a required position with respect to one another, and an application step after the arrangement step, in which, with the test piece and the actuation element in the required position, a pushing force is applied on the test piece by means of the actuation element.

In the process, in the required position the test piece and the actuation element are in contact and upon applying the pushing force the adherent elements are deformed, defining an opening angle with respect to the longitudinal axis. As the pushing force is continued to be applied, furthermore, the deformation increases, thus increasing the opening angle. The opening angle is thus a reflection of the effect of the pushing force and, therefore, from said opening angle it is possible to determine said effect and, consequently, it is possible to determine the energy release rate of the test piece.

Thus, in the proposed process the energy release rate of the test piece is determined from the opening angle measured and from properties of the adherent elements and of the adhesive material and a property or parameter associated with the actuation element, which simplifies the test to a great extent since the only action required, once the actuation element and the test piece are arranged in a required position, is to apply the pushing force. Furthermore, since the opening angle is depended on, it is not necessary to cause the return of the actuation element, unlike the state of the art where it is necessary and is, therefore, more complex. Preferably, the properties of the adherent elements which are considered to determine the energy release rate of the test piece are the thicknesses of the adherent elements and of the adhesive material, and the property or parameter associated with the actuation element is the transverse thickness of the actuation element (the distance between the transverse ends of said actuation element acting on the test piece) or the eccentricity or distance of the center of the actuation element with respect to the central axis of the test piece (which is parallel to the longitudinal axis).

The opening angle is preferably measured in a continuous manner, having an evolution thereof over time as the pushing force is continued to be applied, and since said opening angle is the measured variable, and since this measurement can be carried out simply and accurately, the test is even more facilitated, in addition to the correct result thereof being ensured to a great extent. The energy release rate is furthermore determined without needing estimations, only being based on real information (direct measurement of the opening angle and known properties of the materials), an accurate result being obtained.

A second aspect of the invention relates to an apparatus for determining the energy release rate of a test piece such as the one initially described. The apparatus comprises a first holding tool adapted to hold one of the longitudinal end (the first longitudinal end) of the test piece, a second holding tool adapted to hold the actuation element, and application means for applying a pushing force on the test piece, by means of the actuation element, such that the adherent elements are deformed defining an opening angle with respect to the longitudinal axis, the opening angle increasing as the pushing force is continued to be applied.

The apparatus further comprises a detector configured to detect the opening angle of at least one of the adherent elements of the test piece, and a control device communicated with the detector and configured to determine the energy release rate of the test piece from the opening angle measured and from properties of the adherent elements and of the adhesive material and a property or parameter associated with the actuation element. The advantages which are obtained with the apparatus are at least the same advantages which have been commented for the process.

These and other advantages and features of the invention will become evident in view of the figures and of the detailed description of the invention.

DESCRIPTION OF THE DRAWINGS

Figure 1a shows a test piece subjected to fracture stresses in Mode I.

Figure 1b shows a test piece subjected to fracture stresses in Mode II.

Figure 1c shows a test piece subjected to fracture stresses in Mode III.

Figure 2 shows a test piece adapted to be able to determine its energy release rate with the process and the apparatus of the invention.

Figure 3 shows a preferred embodiment of the apparatus of the invention.

Figure 4 shows an actuation element of the apparatus of Figure 3, acting on the test piece of Figure 2 to subject it to fracture stresses in Mode I.

Figure 5 shows an actuation element of the apparatus of Figure 3, acting on the test piece of Figure 2 to subject it to fracture stresses in Mode II.

DETAILED DISCLOSURE OF THE INVENTION

A first aspect of the invention relates to a process which is adapted to determine the energy release rate of a test piece 1, by means of an actuation element 2, and a second aspect of the invention relates to an apparatus 100 which is adapted to determine the energy release rate of a test piece 1, by means of an actuation element 2.

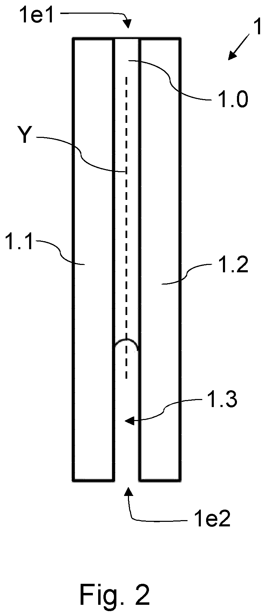

Both for the process and for the apparatus 100 of the invention, the test piece 1 comprises two longitudinal adherent elements 1.1 and 1.2 adhered to one another by an adhesive material 1.0, as depicted in Figure 2, it being possible to include between the possible adhesive materials polymeric materials such as composite materials or resins, for example. The adherent elements 1.1 and 1.2 are extended, in parallel, along a longitudinal axis Y, and the test piece 1 comprises two opposite longitudinal ends with respect to said longitudinal axis Y, a first longitudinal end 1e1 and a second longitudinal end 1e2.

The process comprises an arrangement step in which the test piece 1 and the actuation element 2 are arranged in a required position with respect to one another, and an application step after the arrangement step, in which, with the test piece 1 and the actuation element 2 in the required position, a pushing force is applied on the test piece 1 by means of the actuation element 2, in a direction along the longitudinal axis Y. In some cases, such as in static tests, the pushing force which is applied is constant and is applied in a continuous manner, whereas in other cases, such as in dynamic tests, the pushing force can be cyclic, for example, different values being applied at different times (it is preferably cyclic between two predetermined values). Fatigue tests, for example, can be included among dynamic tests.

The pushing force is preferably applied at least until the fracture of the test piece 1 is detected, in order to be able to thus determine the corresponding energy release rate, although alternatively, it could be applied for the required time without needing the test piece 1 to be fractured. In the required position said test piece 1 and the actuation element 2 are in contact.

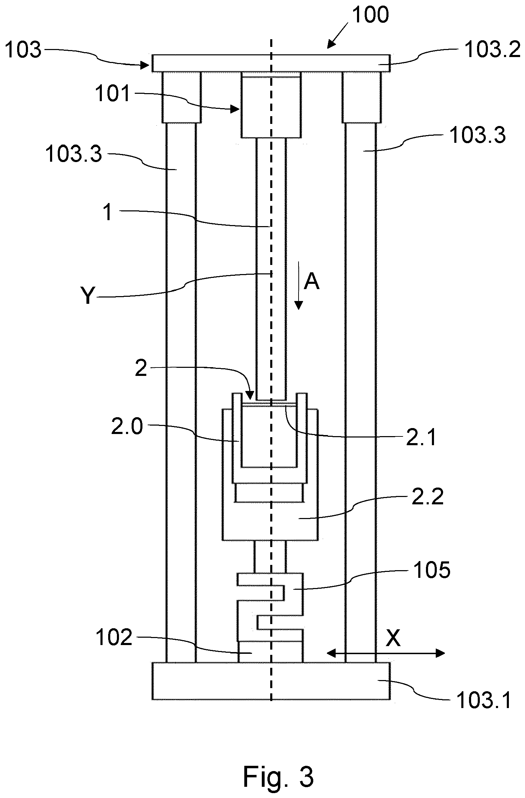

In a preferred embodiment of the process, the test piece 1 is arranged in the required position such that the longitudinal axis Y is vertical, as shown in Figure 3, the pushing force thus being vertical. In said embodiment the test piece 1 is positioned such that its first longitudinal end 1e1 is positioned above its second longitudinal end 1e2 and said test piece 1 is held by the first longitudinal end 1e1.

In the process, since the starting point is a position in which the test piece 1 and the actuation element 2 are in contact, the application of said pushing force causes the adherent elements 1.1 and 1.2 to be deformed. The pushing force is preferably applied in a continuous manner. Upon being deformed, the adherent elements 1.1 and 1.2 define an opening angle θ with respect to the longitudinal axis Y, and this opening angle θ will increase as the pushing force is continued to be applied. The greater the resistance of the adherent elements 1.1 and 1.2 to being deformed, i.e., the slower this increase of the opening angle θ, the greater the energy release rate of the test piece 1. In the preferred embodiment, the test piece 1 will descend due to the effect of gravity.

In the process, at least during part of the application step the opening angle θ of at least one of the adherent elements 1.1 and 1.2 of the test piece 1 is measured or detected, preferably during the entire application step, and the energy release rate of the test piece 1 is determined from the opening angle θ measured, from properties of the adherent elements 1.1 and 1.2 and of the adhesive material 1.0 and from a property or parameter associated with the actuation element 2. The properties which are considered for determining the energy release rate of the test piece 1 are preferably the thicknesses of the adherent elements 1.1 and 1.2 and of the adhesive material 1.0, and the property or the parameter associated with the actuation element 2 is the transverse width Dw of said actuation element 2 (the distance between the transverse ends of said actuation element 2 acting on the test piece 1) or the eccentricity E or distance of the center of the actuation element 2 with respect to the central axis of the test piece 1 (which is parallel to the longitudinal axis Y).

The measurement of the opening angle θ is preferably carried out in a continuous manner, at least during the application of the pushing force, such that the evolution of the opening angle θ over time can be monitored and known. The energy release rate of the test piece 1 can be determined at any time, but given that the evolution of the opening angle θ is known, it can also be known when the test piece 1 is fractured (from which opening angle θ),it being possible to determine the energy release rate in said opening angle θ.

In the preferred embodiment, in the required position, the test piece 1 is arranged in an upper position with respect to the actuation element 2 in the longitudinal axis Y, and the pushing force is applied by causing a linear displacement of the test piece 1 towards the actuation element 2 in an advance direction A along the longitudinal axis Y. In said embodiment, the displacement is furthermore caused by gravity. For example, the test piece 1 and the actuation element 2 can be arranged in the required position, and from that point the test piece 1 can be caused to "rest" on the actuation element 2 with its own weight, said weight being what causes the displacement of the test piece 1 (together with the weight of the structure 103 to which it is joined, for example).

The pushing force can thus be applied in a very simple manner, and the desired pushing force value can furthermore be applied in a very simple manner by simply constructing a test piece 1 with the required weight or, more simply, by adding to the test piece 1 (or to the structure 103 to which it is joined) an element with the weight required in each case, to obtain the desired pushing force in each case.

Alternatively, the pushing force can be generated by means of an actuator pushing the test piece 1 and/or the actuation element 2 with said required pushing force. In this case, the pushing force does not have to be vertical, being able to have the desired orientation, therefore the arrangement of the test piece 1 and the joining element 2 could be different. With the actuator the pushing force required in each case could be applied.

To detect the opening angle θ, at least one inclinometer 3 associated with the corresponding adherent element 1.1 and 1.2, preferably by contact is used in the process. In the preferred embodiment an inclinometer 3 associated with each adherent element 1.1 and 1.2 is used, the opening angle θ of both adherent elements 1.1 and 1.2 being detected. In said preferred embodiment, to determine the energy release rate the average between the two opening angles θ measured is determined as the opening angle θ. An inclinometer can have errors due to, for example, tolerances, and the fact of using two inclinometers 3 and combining both measurements as has been described allows compensating for these possible errors, at least partly, a more accurate opening angle θ for determining said energy release rate being obtained.

The process of the invention can be used to determine the energy release rate (GI) of the test piece 1 in the mode known in field as Mode I and already described above. In this case, the test piece 1 comprises a crack 1.3 at the second longitudinal end 1e2 between both adherent elements 1.1 and 1.2, of a determined length, such that said adherent elements 1.1 and 1.2 are not adhered to one another in the area of the test piece 1 comprising said crack 1.3 (projecting area), as depicted in Figure 2. The actuation element 2 is housed at least partially in said crack 1.3 with said actuation element 2 and the test piece 1 in the required position, such that said actuation element 2 is inserted between the two adherent elements 1.1 and 1.2 of said test piece 1, and advances, as said pushing force is continued to be applied. In the preferred embodiment, the test piece 1 will descend due to the effect of gravity, the actuation element 2 thus advancing between the two adherent elements 1.1 and 1.2 (the actuation element 2 remains stationary).

In this case, furthermore, the energy release rate GI is determined according to the following equation:

$$G_I = \frac{16\, E_x h^3 \tan^4 \theta}{27\, (D_w - t_a)^2} \qquad (1)$$

wherein:

Ex is the Young's modulus of the adherent elements 1.1 and 1.2,

h is the thickness of said adherent elements 1.1 and 1.2 (thickness which is the same in both adherent elements 1.1 and 1.2),

Dw is the thickness of the actuation element 2, and

Ta is the thickness of the adhesive material 1.0.

This equation is obtained from the expressions used in the simple beam theory, particularly from of following equation:

$$G_I = \frac{3}{2} \frac{P\delta_y}{Ba} \qquad (2)$$

wherein:

P is the opening force,
$\delta y$ is the opening displacement,
B is the width of the adhesive joint, and
a is the length of the crack 1.3.

By applying the simple beam theory, both the expression for the opening force P and the geometric expression for relating the length of crack a with the opening angle θ can also be obtained:

$$P = \frac{E_x B h^3 \delta_y}{4a^3} \qquad (3)$$

$$a = \frac{3}{2} \frac{\delta_y}{\tan\theta} \qquad (4)$$

The opening displacement $\delta y$ is described as:

$$\delta_y = \frac{D_w - t_a}{2} \qquad (5)$$

Equation (1) is reached by developing equations (2), (3), (4) and (5).

Thus, in this case the properties of the adherent elements 1.1 and 1.2 and of the adhesive material 1.0 which are considered as their thicknesses.

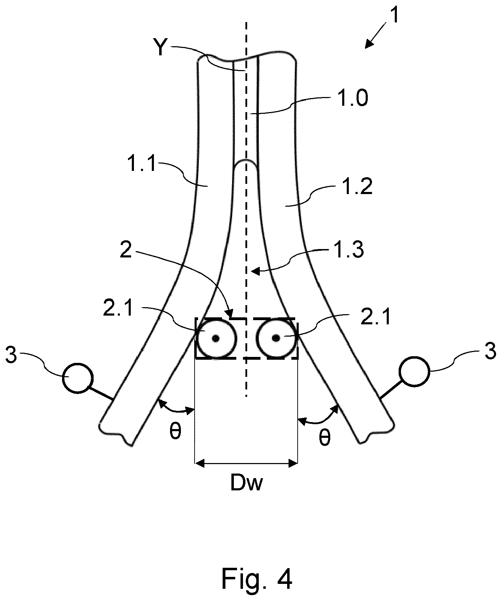

The actuation element 2 preferably comprises at least one roller 2.1 extending transversely to the longitudinal axis Y, and the thickness Dw refers to the transverse width of said roller 2.1. In some cases, as detailed below with respect to the apparatus 100, the actuation element 2 comprises two rollers 2.1 which are parallel and transversely spaced from one another, the thickness Dw being in this case the transverse width of both rollers 2.1 (distance between axes of the rollers 2.1 plus the radius of both rollers 2.1), as depicted in Figure 4.

The detector (preferable at least one inclinometer 3) is preferably associated with the projecting area of the corresponding adherent element 1.1 and 1.2 (projecting area of the test piece 1).

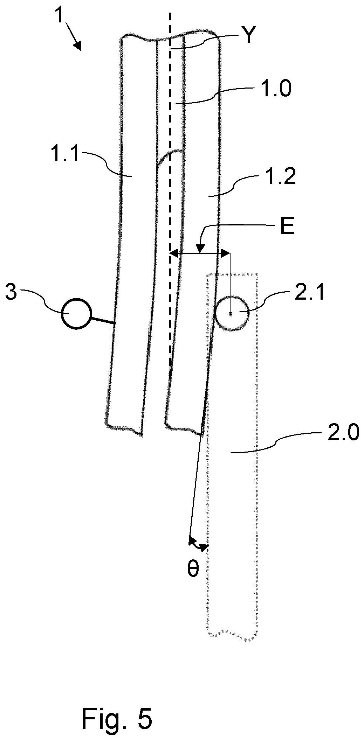

The process of the invention can also be used to determine the energy release rate of the test piece 1 in the mode known in the field as Mode II. In this case, in the required position the actuation element 2 is in contact with one of the longitudinal sides of the test piece 1, as shown in Figure 5, such that the pushing force is applied on said side (on one of the adherent elements 1.1 and 1.2).

A second aspect of the invention relates to an apparatus 100 such as the one shown in Figure 5, which is adapted to determine the energy release rate of a test piece 1, such as the one described previously, by means of an actuation element 2.

The apparatus 100 comprises a first holding tool 101 adapted to hold the first longitudinal end 1e1 of the test piece 1; a second holding tool 102 adapted to hold the actuation element 2; and application means for applying a pushing force on the test piece 1, by means of the actuation element 2 and in a direction along the longitudinal axis Y, said application means being configured for said pushing force to cause the deformation of the adherent elements 1.1 and 1.2, said adherent elements 1.1 and 1.2 defining, with said deformation, an opening angle θ with respect to the longitudinal axis Y, as has been described for the process.

The apparatus 100 further comprises a detector configured to detect the opening angle θ of at least one of the adherent elements 1.1 and 1.2 of the test piece 1, and a control device communicated with the detector and configured to determine the energy release rate of the test piece 1 from the opening angle θ measured, from properties of the adherent elements 1.1 and 1.2 and of the adhesive material 1.0 and from a property or parameter associated with the actuation element 2. Preferably, the properties which are considered to determine the energy release rate of the test piece 1 are the thicknesses of the adherent elements 1.1 and 1.2 and of the adhesive material 1.0, and a property or parameter associated with the actuation element 2 which is considered is the transverse width Dw of said actuation element 2 (the distance between the transverse ends of said actuation element 2 acting on the test piece 1) or the eccentricity E or distance of the center of the actuation element 2 with respect to the central axis of the test piece 1 (which is parallel to the longitudinal axis Y).

In a preferred embodiment, the detector comprises an inclinometer 3 associated with each corresponding adherent element 1.1 and 1.2, two opening angles θ (one associated with each adherent element 1.1 and 1.2) thus being detected. As has been described for the process, in these cases the opening angle θ used to determine the energy release rate is the average of both opening angles θ measured. Alternatively, the detector could comprise only one inclinometer 3 associated with only one of the adherent elements 1.1 and 1.2, the opening angle θ measured being the one used to determine said energy release rate.

The apparatus 100 can comprise, as in the preferred embodiment, for example, a structure 103 with a lower support 103.1, an upper support 103.2 facing the lower support 103.1 and at least one vertical column 103.3 joined to both supports 103.1 and 103.2, preferably four, and each of the holding tools 101 and 102 is joined to a respective support 103.1 or 103.2 of the structure 103.

The vertical column 103.3 is extended along the longitudinal axis Y, said longitudinal axis Y being vertical. In the preferred embodiment the apparatus 100 comprises a structure 103 of this type, with four parallel vertical columns 103.3.

In some embodiments, as in the preferred embodiment, the first holding tool 101 is joined to the upper support 103.2 and the second holding tool 102 is joined to the lower support 103.1. At least one of said holding tools 101 and 102, preferably the second holding tool 102, is furthermore joined to the corresponding support 103.1 or 103.2 with freedom of linear displacement along an axis X transverse to the longitudinal axis Y, such that the relative position between the actuation element 2 and the test piece 1 can be adjusted according to needs. This can be useful for adapting to different test pieces 1, or to different types of tests for one and the same type of test piece 1 (Modes I and II described for the process, for example), for example.

In the embodiments in which the apparatus comprises a structure 103, the application means can comprise a mass not depicted in the figures, which is joined to the upper support 103.2, to cause the descent by gravity of said upper support 103.2 towards the lower support 103.1, as has been described for the process of the invention. Said mass comprises a weight depending on the value of the pushing force which is to be applied, it thus being possible to arrange masses of different weights according to needs (according to the pushing force which is to be applied). These masses would be calibrated, such that the pushing force which is applied is known. In other cases it is not necessary to use a mass, since the pushing force which is generated with the structure 103 itself, the first holding tool 101 and the test piece 1 is the required one (and the pushing force is likewise known).

In the embodiments in which the apparatus comprises a structure 103, the first holding tool 101 preferably comprises two facing elements in an axis transverse to the longitudinal axis Y, between which the test piece 1 is arranged, said first holding tool 101 being joined to the corresponding support 103.1 of the structure 103 such that said facing elements can be linearly displaced with respect to one another, to move closer to or further from one another, in order to accommodate test pieces 1 of different dimensions. This allows using the apparatus 100 for test pieces 1 of different types, in a simple manner.

As has been previously described, the actuation element 2 can preferably comprise one or two rollers 2.1. In the case of wishing the test piece 1 to be subjected to fracture stresses according to mode II (see Figure 5), one roller 2.1 is sufficient, but two rollers 2.1 could likewise be used, such that the same actuation element 2 can be used in any case. The roller 2.1 can rotate with respect to its axis, to reduce the impact or the influence of the friction between the actuation element 2 and the test piece 1 in the end result.

For the case of wishing to subject the test piece 1 to fracture stresses according to Mode I (see Figure 4), the actuation element 2 preferably comprises two rollers 2.1 in parallel. The fact of using two rollers 2.1 as the actuation element 2 involves there being a lower resistance between said actuation element 2 and the test piece 1, since the area of said actuation element 2 contacting with the test piece 1 is reduced to a minimum. This causes the results obtained in the test, particularly the energy release rate determined, to be more faithful to the real ones since the friction has a smaller influence. The rollers 2.1 can rotate with respect to their axis, so that the friction has an even smaller influence.

In the case of using two rollers 2.1, said rollers 2.1 are preferably joined to the main support 2.2 such that the distance between said rollers 2.1 is adjustable. To that end, each roller 2.1 is preferably joined to a respective support element 2.0 with freedom of rotation, and the two support elements 2.0 are joined with freedom of linear displacement to the main support 2.2, the distance between said rollers 2.1 being adjusted by means of said linear displacement. This allows being able to adjust the actuation element 2 to different test pieces 1, which have different thicknesses of the adhesive material 1.0, for example.

The fact that the apparatus 100 comprises a structure 103 such as the one described, in any of its embodiments and configurations, allows being able to carry out the corresponding test in the required atmospheric conditions at each time in a simple manner, since, for example, it is possible to arrange the apparatus 100 in a climate chamber where it can be exposed to the required environmental conditions (of humidity and temperature, for example). This allows being able to obtain the performance of one and the same test piece 1 (or test pieces 1 of the same type) in different atmospheric conditions in a simple manner.

The test piece 1 can comprise a crack 1.3 such as the one described for the process, which is especially advantageous for determining the energy release rate (GI) in Mode I, as has been described. For these cases, the first holding tool 101 and the second holding tool 102 are arranged such that the actuation element 2 is facing the second longitudinal end 1e2 of the test piece 1, which allows the rollers 2.1 to be housed in the crack 1.3.

At least in these cases, furthermore, the detector (preferably at least one inclinometer 3) is preferably associated with the projecting area of the corresponding adherent element 1.1 and 1.2 (projecting area of the test piece 1). In these cases, the control device is configured to determine the energy release rate GI, as has been described for the process, according to equation (1):

$$G_I = \frac{16}{27} \frac{E_x h^3 \tan^4 \theta}{(D_w - t_a)^2} \qquad (1)$$

The apparatus 100 can further comprise a load cell 105 for detecting the pushing force which is being applied. It can thus be detected if there is any error during the corresponding test, or the required pushing force can be adjusted before starting the test, in a simple manner. In the preferred embodiment of the apparatus 100, the load cell 105 is arranged between the actuation element 2 and the lower support 103.1. In particular, in said embodiment the joining element 2 is joined to the load cell 105 and the load cell is joined to the second holding tool 102.

Generally, what is described for the process, in any of its embodiments and/or configurations, is also valid for the embodiments and/or configurations of the apparatus 100. The apparatus 100 thus comprises the suitable embodiment and/or configuration for supporting the corresponding embodiment and/or configuration of the process.

Likewise, what is described for the apparatus 100, in any of its embodiments and/or configurations, is also valid for the embodiments and/or configurations of the process. Thus, the process comprises the suitable embodiment and/or configuration for the corresponding embodiment and/or configuration of the apparatus 100.

**Claims**

1. Process for determining the energy release rate of a test piece, by means of an actuation element (2), the test piece (1) comprising at least two longitudinal adherent elements (1.1, 1.2) adhered to one another by an adhesive material (1.0) and which are extended, in parallel, along a longitudinal axis (Y), and two opposite longitudinal ends (1e1, 1e2) with respect to said longitudinal axis (Y), the process comprising an arrangement step in which the test piece (1) and the actuation element (2) are arranged in a required position with respect to one another, and an application step after the arrangement step, in which, with the test piece (1) and the actuation element (2) in the required position, a pushing force is applied on the test piece (1) by means of the actuation element (2), **characterized in that** in the required position

the test piece (1) and the actuation element (2) are in contact, and in the application step the pushing force is applied such that the adherent elements (1.1, 1.2) are deformed defining an opening angle (θ) with respect to the longitudinal axis (Y), said opening angle (θ) increasing as said pushing force is continued to be applied, and wherein, at least during the application step, the opening angle (θ) of at least one of the adherent elements (1.1, 1.2) of the test piece (1) is measured or detected and the energy release rate of the test piece (1) is determined from the opening angle (θ) measured, from at least one property of the adherent elements (1.1, 1.2) and of the adhesive material (1.0) and from a property or parameter associated with the actuation element (2).

2. Process according to claim 1, wherein the property of the adherent elements (1.1, 1.2) and of the adhesive material (1.0) which is taken into account to determine the energy release rate of the test piece (1) is the thickness of said adherent elements (1.1, 1.2), and wherein the property or parameter associated with the actuation element (2) which is taken into account to determine said energy release rate of the test piece (1) is a transverse width (Dw) of the actuation element (2) or an eccentricity (E) of the center of the actuation element (2) with respect to the longitudinal axis (Y).

3. Process according to claim 1 or 2, wherein the longitudinal axis (Y) is vertical, and wherein, in the required position, the test piece (1) is arranged in an upper position with respect to the actuation element (2) in the longitudinal axis (Y), and the pushing force is applied, by causing a linear displacement of the test piece (1) towards the actuation element (2) in an advance direction (A) along the longitudinal axis (Y), preferably by gravity.

4. Process according to any of claims 1 to 3, wherein to measure the opening angle (θ) which is used to determine the energy release rate of the test piece (1), at least one inclinometer (3) associated with the corresponding adherent element (1.1, 1.2) is used, said opening angle (θ) measured being determined as the opening angle (θ) for determining the energy release rate of the test piece (1), or an inclinometer (3) associated with each of the adherent elements (1.1, 1.2) is used, two opening angles (θ) being measured, the average between the two opening angles (θ) measured being determined as the opening angle (θ) which is used to determine the energy release rate of the test piece (1).

5. Process according to any of claims 1 to 4, wherein in the arrangement step the test piece (1) is held by the first longitudinal end (1e2), said test piece (1) comprising a crack (1.3) in the second longitudinal end (1e2) between both adherent elements (1.1, 1.2), of a determined length, such that said adherent elements (1.1, 1.2) are not adhered to one another in the area of the test piece (1) comprising said crack (1.3), and wherein in the arrangement step the actuation element (2) is housed at least partially in said crack (1.3), such that said actuation element (2) advances between the two adherent elements (1.1, 1.2) of said test piece (1) as the pushing force is applied in the application step.

6. Process according to any of claims 1 to 5, wherein the thickness of both adherent elements (1.1, 1.2) is the same, the energy release rate being determined according to the equation

$$ G_I = \frac{16}{27} \frac{E_x h^3 \tan^4 \theta}{(D_w - t_a)^2}, $$

wherein

GI is the energy release rate,
Ex is the Young's modulus of the adherent elements (1.1, 1.2),
h is the thickness of said adherent elements (1.1, 1.2),
Dw is the transverse width of the actuation element (2), and
Ta is the thickness of the adhesive material (1.0).

7. Process according to any of claims 1 to 5, wherein, in the arrangement step the actuation element (2) is arranged in contact with one of the longitudinal sides of the test piece (1), such that in the application step the pushing force is applied on said side.

8. Apparatus for determining the energy release rate of a test piece, by means of an actuation element (2), the test piece (1) comprising at least two longitudinal adherent elements (1.1, 1.2) adhered to one another by an adhesive material (1.0) and which are extended, in parallel, along a longitudinal axis (Y), and two opposite longitudinal ends (1e1, 1e2) with respect to said longitudinal axis (Y), **characterized in that** the apparatus (100) comprises a first holding tool (101) adapted to hold the first longitudinal end (1e1) of the test piece (1); a second holding tool (102) adapted to hold the actuation element (2); application means adapted to apply a pushing force on the test piece (1), by means of the actuation element (2), such that the adherent elements (1.1, 1.2) are deformed as the pushing force is applied, defining an opening angle (θ) with respect to the longitudinal axis (Y); a detector configured to detect the opening angle (θ) of at least one of the adherent elements (1.1, 1.2) of the test piece (1); and a control device which is communicated with the detector and which is configured to receive the opening angle (θ) detected by said detector and to determine the energy release rate of the test piece (1) from said opening angle (θ) measured, from the properties of the adherent elements (1.1, 1.2) and of the adhesive material (1.0) and from a property or parameter associated with the actuation element (2).

9. Apparatus according to claim 8, comprising a structure (103) with a lower support (103.1), an upper support (103.2) facing the lower support (103.1) and at least one vertical column (103.3) joined to both supports (103.1, 103.2), each of the holding tools (101, 102) being joined to a respective support (103.1, 103.2) of the structure (103) and the vertical column (103.03) extending along the longitudinal axis (Y), said longitudinal axis (Y) being vertical.

10. Apparatus according to claim 9, wherein the first holding tool (101) is joined to the upper support (103.2) and the second holding tool (102) is joined to the lower support (103.1).

11. Apparatus according to claim 9 or 10, wherein the application means comprise a mass (104) joined to the upper support (103.2) to cause the descent by gravity of said upper support (103.2) towards the lower support (103.1), said mass (104) comprising a weight depending on the value of the pushing force which is to be applied.

12. Apparatus according to any of claims 9 to 11, wherein the second holding tool (102) is joined to the corresponding support (103.1) of the structure (103) with freedom of linear displacement along an axis (X) transverse to the longitudinal axis (Y), to be able to adjust the position of the actuation element (2) with respect to the test piece (1).

13. Apparatus according to any of claims 9 to 12, wherein the first holding tool (101) comprises two facing elements between which the test piece (1) is arranged, said first holding tool (101) being joined to the corresponding support (103.1) of the structure (103) such that said facing elements can be linearly displaced with respect to one another, to move closer to further away from one another, in order to accommodate test pieces (1) of different dimensions.

14. Apparatus according to any of claims 8 to 13, wherein the actuation element (2) comprises two rollers (2.1) which are parallel and transverse to the longitudinal axis (Y), and a main support (2.2) configured to support both rollers (2.1), said rollers (2.1) being joined to said main support (2.2) such that the distance between said rollers (2.1) is adjustable, each roller (2.1) being joined to a respective support element (2.0) with freedom of rotation, and the two support elements (2.0) being joined with freedom of linear displacement to the main support (2.0), to adjust the distance between said rollers (2.1).

15. Apparatus according to any of claims 8 to 14, wherein the thickness of both adherent elements (1.1, 1.2) is the same, the control device being configured to determine the energy release rate according to the equation

$$G_I = \frac{16}{27} \frac{E_x h^3 \tan^4 \theta}{(D_w - t_a)^2},$$

wherein

GI is the energy release rate,
Ex is the Young's modulus of the adherent elements (1.1, 1.2),
h is the thickness of said adherent elements (1.1, 1.2),
Dw is the transverse width of the actuation element (2), and
Ta is the thickness of the adhesive material (1.0).

1'

Fig. 1a

1'

Fig. 1c

1'

Fig. 1b

Fig. 2

Fig. 3

Fig. 4

Fig. 5

## INTERNATIONAL SEARCH REPORT

| International application No |
| --- |
| PCT/ES2020/070074 |

**A. CLASSIFICATION OF SUBJECT MATTER**
INV.  G01N3/303    G01N19/04    G01N30/20    G01N3/20
ADD.

According to International Patent Classification (IPC) or to both national classification and IPC

**B. FIELDS SEARCHED**

Minimum documentation searched (classification system followed by classification symbols)
G01N

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
| --- | --- | --- |
| X<br><br>A | DE 10 2017 121405 A1 (TECHNISCHE HOCHSCHULE MITTELHESSEN [DE]) 14 March 2019 (2019-03-14) paragraphs [0015], [0025], [0026], [0032], [0038], [0047], [0048], [0055]; figures 5,6<br>----- | 1-5,7-14<br><br>6,15 |
| X<br><br><br><br><br><br><br><br>A | SILVA D F O ET AL: "Application a direct/cohesive zone method for the evaluation of scarf adhesive joints", APPLIED ADHESION SCIENCE, BIOMED CENTRAL LTD, LONDON, UK, vol. 6, no. 1, 20 December 2018 (2018-12-20), pages 1-20, XP021265702, DOI: 10.1186/S40563-018-0115-2 figures 1,3(a); table 1<br>-----<br>-/-- | 1-5,7-14<br><br><br><br><br><br><br><br>6,15 |

[X] Further documents are listed in the continuation of Box C.     [X] See patent family annex.

\* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| 23 September 2020 | 01/10/2020 |

| Name and mailing address of the ISA/ | Authorized officer |
| --- | --- |
| European Patent Office, P.B. 5818 Patentlaan 2 NL - 2280 HV Rijswijk Tel. (+31-70) 340-2040, Fax: (+31-70) 340-3016 | Eidmann, Gunnar |

Form PCT/ISA/210 (second sheet) (April 2005)

page 1 of 2

## INTERNATIONAL SEARCH REPORT

| International application No |
|---|
| PCT/ES2020/070074 |

C(Continuation). DOCUMENTS CONSIDERED TO BE RELEVANT

| Category* | Citation of document, with indication, where appropriate, of the relevant passages | Relevant to claim No. |
|---|---|---|
| A | MARTINY ET AL: "Numerical analysis of the energy contributions in peel tests: A steady-state multilevel finite element approach", INTERNATIONAL JOURNAL OF ADHESION AND ADHESIVES, ELSEVIER, AMSTERDAM, NL, vol. 28, no. 4-5, 31 January 2008 (2008-01-31), pages 222-236, XP022442438, ISSN: 0143-7496, DOI: 10.1016/J.IJADHADH.2007.06.005 section 2.2 "Wedge-peel tests"; figure 1a ----- | 3,5,9-13 |
| A | SARGENT ET AL: "The influence of inclusions on the strength of adhesive joints", INTERNATIONAL JOURNAL OF ADHESION AND ADHESIVES, ELSEVIER, AMSTERDAM, NL, vol. 26, no. 3, 1 June 2006 (2006-06-01), pages 151-161, XP027951617, ISSN: 0143-7496 [retrieved on 2006-06-01] section 3 "Peel tests, scb tests and fracture energies"; figures 2(b), 2(c) ----- | 1-15 |
| A | MANTEROLA J ET AL: "Effect of the width-to-thickness ratio on the mode I fracture toughness of flexible bonded joints", ENGINEERING FRACTURE MECHANICS, ELSEVIER, AMSTERDAM, NL, vol. 218, 31 July 2019 (2019-07-31), XP085791441, ISSN: 0013-7944, DOI: 10.1016/J.ENGFRACMECH.2019.106584 [retrieved on 2019-07-31] section 3.3. "DCB tests: Set-up and execution"; equation (20); figures 8a), 8b) ----- | 1-15 |
| A | COSTANTINO CRETON ET AL: "Fracture and adhesion of soft materials: a review", REPORTS ON PROGRESS IN PHYSICS, INSTITUTE OF PHYSICS PUBLISHING, BRISTOL, GB, vol. 79, no. 4, 23 March 2016 (2016-03-23), page 46601, XP020300068, ISSN: 0034-4885, DOI: 10.1088/0034-4885/79/4/046601 [retrieved on 2016-03-23] section 5.2. "Macroscopic analysis of the steady state debonding by the peeling test"; equations (26) and (27); figures 15,16 ----- | 1-15 |

Form PCT/ISA/210 (continuation of second sheet) (April 2005)

## INTERNATIONAL SEARCH REPORT

Information on patent family members

| International application No |
|---|
| PCT/ES2020/070074 |

| Patent document cited in search report | Publication date | Patent family member(s) | Publication date |
|---|---|---|---|
| DE 102017121405 A1 | 14-03-2019 | NONE | |

Form PCT/ISA/210 (patent family annex) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2460468 A1